# EUROPÄISCHE PATENTSCHRIFT

(11) **EP 2 006 514 B1**
(45) Veröffentlichungstag und Bekanntmachung des Hinweises auf die Patenterteilung: **15.02.2012**
(21) Anmeldenummer: 08009679.5
(22) Anmeldetag: 28.05.2008
(51) Int. Cl.: F02D 23/00, F02D 41/00, F02D 29/06

(54) **Stationäre Brennkraftmaschine**
Stationary combustion engine
Moteur à combustion interne fixe

(30) Priorität: 20.06.2007 AT 9552007
(43) Veröffentlichungstag der Anmeldung: 24.12.2008
(73) Patentinhaber: GE Jenbacher GmbH & Co OHG, 6200 Jenbach (AT)
(72) Erfinder: Greuter, Rainer, 6112 Wattens (AT); Hirzinger, Johann, 6345 Kössen (AT); Klausner, Johann, 6391 St. Jakob i.H. (AT)
(74) Vertreter: Gangl, Markus

(56) Entgegenhaltungen:
- EP-A1- 1 158 149
- EP-A2- 0 757 169
- DE-A1- 3 939 754
- DE-A1- 10 329 763
- GB-A- 2 105 878
- US-B1- 6 244 050

## Beschreibung

Die Erfindung betrifft ein Verfahren zum Betreiben einer stationären Brennkraftmaschine, insbesondere eines Gasmotors, mit einer Verdichtungseinrichtung, das der Brennkraftmaschine zugeführtes Gas verdichtet, und mit einer der Verdichtungseinrichtung nachgeschalteten Drosseleinrichtung mit welcher die Menge des der Brennkraftmaschine zugeführten verdichteten Gases veränderbar ist, wobei die Verdichtungseinrichtung über eine Abgasturbine mit variabler Turbinengeometrie betrieben wird, wobei die Brennkraftmaschine über die Betätigung von zumindest zwei Steilgliedern auf eine im Wesentlichen konstante Motorregelgröße geregelt wird. Weiters betrifft die Erfindung eine Regeleinrichtung für eine stationäre Brennkraftmaschine zur Durchführung eines Verfahrens der vorgenannten Art. Schließlich betrifft die Erfindung eine stationäre Brennkraftmaschine, insbesondere einen Gasmotor mit einer solchen Regeleinrichtung sowie einen durch eine solche Brennkraftmaschine betreibbaren Generator.

Um bei einer Brennkraftmaschine, wie einem Verbrennungsmotor, insbesondere einem stationären Gasmotor, eine Motorregelgröße, wie die Leistung oder die Drehzahl, zu regeln, stehen meist mehrere Stellglieder an der Brennkraftmaschine zur Verfügung. In erster Linie wird die Drosselklappe im Ansaugtrakt als Stellglied betätigt. Bei einer aufgeladenen Brennkraftmaschine kann man die Leistung oder Drehzahl z.B. zusätzlich über ein steuerbares Ventil (Umblaseventil) als zweitem Stellglied beeinflussen, das parallel zum Verdichter im Ansaugtrakt des Verbrennungsmotors angeordnet ist, In der EP 0 757 169 B1 wird beispielsweise eine Regelung vorgeschlagen, bei der die Motorregelgröße in unterschiedlichen Betriebszuständen bei unterschiedlichen Leistungen oder Drehzahlen über Verstellung jeweils eines Stellgliedes geregelt wird. Dabei wird jeweils immer nur ein Stellglied von einem zugeordneten Regler verstellt, während das andere Stellglied in fester Stellung gehalten wird. Konkret schlägt die EP 0 757 169 B1 als jeweilige Stellglieder zur Regelung der Motorgröße vor, die Drosselklappenstellung und die Öffnung des Umblaseventils zu ändern. Eine solche Regelung erweist sich vorteilhaft beim Betrieb in unterschiedlichen Betriebszuständen.

Häufig werden gattungsgemäße stationäre Brennkraftmaschinen zur Gewinnung von Strom im Inselbetrieb oder Notstrombetrieb oder zum Netzparallelbetrieb herangezogen. Abhängig vom jeweiligen Betrieb,' ist es erforderlich, die Ausgangsleistung oder die Drehzahl der Brennkraftmaschine konstant zu halten. Die Störanfälligkeit und die zunehmende Sensitivität der von einer solchen Brennkraftmaschine direkt oder indirekt angetrieben elektrischen Einrichtung machen es erforderlich, dass die jeweilige Motorgröße auch in wechselnden Situationen mit höchster Präzision konstant gehalten wird. Wechselnde Situationen können z.B. durch Störeinflüsse oder Laständerungen auftreten.

Aufgabe der vorliegenden Erfindung ist es daher, Einrichtungen der eingangs genannten Gattung zu schaffen, mit denen eine höhere Regelgenauigkeit auf eine konstante Motorregelgröße, vorzugsweise Drehzahl oder Leistung, erzielbar sind.

Diese Aufgabe wird durch die unabhängigen Ansprüche gelöst.

Eine entsprechende Regeleinrichtung für eine stationäre Brennkraftmaschine mit einer über eine Abgasturbine mit variabler Geometrie betreibbaren Verdichtungseinrichtung und mit einer Drosseleinrichtung, welche eine. Motorregelgröße auf einen im Wesentlichen konstanten Sollwert regelt, wobei über die Regeleinrichtung zumindest zwei Stellglieder beeinflussbar sind, ist dadurch gekennzeichnet, dass im Betriebszustand bei einer Regelabweichung der Motorregelgröße vom Sollwert die der Brennkraftmaschine zugeführte Gasmenge über die Regeleinrichtung regelbar ist, indem die Stellung der Drosseleinrichtung als erstem Stellglied und die Geometrie der Abgasturbine als zweitem Stellglied verzögert zueinander gemäß Anspruch 1 veränderbar ist.

Eine stationäre Brennkraftmaschine, insbesondere Gasmotor, mit einer Verdichtungseinrichtung zum Verdichten von dem Motor zugeführten Gas und einer der Verdichtungseinrichtung nachgeschalteten Drosselklappe zur Mengenbeschränkung des der Brennkraftmaschine zugeführten verdichteten Gases, wobei die Verdichtungseinrichtung über eine Abgasturbine variabler Turbinengeometrie betreibbar ist, ist durch eine zuvor genannte Regeleinrichtung gekennzeichnet, welche im Betriebszustand die Brennkraftmaschine auf eine im Wesentlichen konstante Motorregelgröße über die Veränderung von zumindest zwei Stellgliedern regelt, indem die Regeleinrichtung die Drosseleinrichtung als erstes Stellglied betätigt und die Geometrie der Abgasturbine als zweites Stellglied verändert. Unter nachgeschaltet wird im Rahmen der Offenbarung verstanden, dass das entsprechende Merkmal stromabwärts des Gasstromes in Richtung Auspuff angeordnet ist.

Der Erfindung liegt die Idee zugrunde, zwei Stellglieder für die Regelung heranzuziehen, mit denen rasch die der Brennkraftmaschine zugeführte Gasmenge direkt variierbar ist. Ein Vorteil der Erfindung liegt auch darin, dass in den Einlasstrakt keine zusätzlichen Volumina durch Bypassleitungen eingebracht werden müssen, durch die es zu einer Regelverzögerung kommen würde. Sowohl durch die Veränderung der Geometrie in der Abgasturbine als auch durch die Drosselklappenstellung wird unmittelbar und direkt auf die der Brennkraftmaschine zugeführte Gasmenge eingewirkt.

Weitere Details und Vorteile der Erfindung ergeben sich aus den abhängigen Ansprüchen.

Für das Verfahren kann insbesondere vorgesehen sein, dass die Brennkraftmaschine einen Generator betreibt. In diesem Fall ist - insbesondere beim Inselbetrieb oder Notstrombetrieb - bevorzugt vorgesehen, dass der Generator mit konstanter Drehzahl und damit mit fester Frequenz geregelt wird, da so die Gefahren einer Beschädigung an empfindlichen Endgeräten minimiert wird.

Beim Netzparallelbetrieb ist besonders vorteilhaft vorgesehen, dass die Brennkraftmaschine auf konstante Leistung geregelt wird. In diesem Fall wird z.B. beim Generatorbetrieb stets eine konstante Energiemenge in ein Netz eingespeist.

Als günstige Regelcharakteristik hat es sich erwiesen, wenn die Geometrie der Abgasturbine nur bei einer Regelabweichung der Motorregelgröße vom Sollwert von zumindest 5% verändert wird. In diesem Fall wird bei geringen Schwankungen nach wie vor nur über die Drosselklappe geregelt, während bei stärkeren Schwankungen zusätzlich die Abgasturbinengeometrie verändert wird. So kann beispielsweise bei hohen Lastsprüngen rasch auf die konstante Motorregelgröße hingeregelt werden, während bei geringen Regelabweichungen eine Nachregelung allein durch Betätigung der Drosselklappe ausreicht. Bevorzugt ist vorgesehen, dass das der Drosseleinrichtung zuströmende Gas gekühlt wird. In einer besonders bevorzugten Ausführungsvariante ist weiters vorgesehen, dass der Verdichtungseinrichtung zugeführte Gas ein Treibstoff/Luftgemisch ist. Im Gegensatz zu vielen herkömmlichen Verdichtungseinrichtungen, bei denen das verdichtete Gas im Wesentlichen aus verdichteter Luft besteht, die dem Motor direkt zugeführt wird, wobei gleichzeitig in den Motor ein Treibstoff eingespritzt wird, ist es bei Gasmotoren vorteilhaft, bereits vor dem Verdichten ein Treibstoff/Luftgemisch zu erzeugen, um die Leistung zu erhöhen.

Bei einer erfindungsgemäßen Regeleinrichtung ist vorteilhaft, wenn die Motorregelgröße die Leistung oder die Drehzahl ist. Dabei hat es sich als günstig erwiesen, wenn die Regeleinrichtung derart ausgebildet ist, dass die Veränderung der Geometrie der Abgasturbine untergeordnet erfolgt. Insbesondere ist es günstig, wenn die Reglercharakteristiken der wenigstens zwei Regler derart sind, dass die Veränderung der Geometrie der Abgasturbine der Beeinflussung der Stellung der Drosseleinrichtung untergelagert ist. Eine Unterordnung kann beispielsweise durch eine entsprechende Reglercharakteristik erfolgen, z.B. durch einen entsprechenden Integralteil bei einem PID-Regler oder durch Vorschalten eines Totbandes. Daher hat es sich als vorteilhaft erwiesen, wenn den beiden Stellgrößen jeweils ein Regler, zugeordnet ist. Die günstige Ausführungsvariante sieht vor, dass die Regeleinrichtung derart ausgebildet ist, dass sie bei einer Abweichung der Motorregelgröße von unter 5% vom Sollwert nur die Drosseleinrichtung betätigt wird. Weiters kann vorgesehen sein, dass die Regeleinrichtung zumindest einen PID Regler aufweist sowie dass der Regeleinrichtung für zumindest eine Stellgröße eine Stellgrößenbeschränkung zugeordnet ist und dass zumindest ein Regler ein Totband zur Verzögerung des Stellgrößeneingriffes aufweist. Das Totband ist günstigerweise derart ausgebildet, dass es eine Abweichung der Regelgröße vom Sollwert von bis zu 5 % zulässt.

Eine stationäre Brennkraftmaschine der eingangs genannten Gattung ist erfindungsgemäß vorteilhaft ausgebildet, wenn mit der Brennkraftmaschine ein Generator betreibbar ist, wobei dann die Motorregelgröße konstante Drehzahl der Brennkraftmaschine sein könnte. Vorteilhaft ist dies für den sogenannten Netzparallelbetrieb des Generators. Weiters kann vorgesehen sein, dass mit der Brennkraftmaschine ein Generator betreibbar ist, wobei die Regelgröße konstante Leistung eines Generators ist. Diese ist günstig für den Inselbetrieb oder Notstrombetrieb des Generators.

Günstigerweise ist vorgesehen, dass zwischen Verdichtungseinrichtung und Drosseleinrichtung eine Kühleinrichtung angeordnet ist, mit welcher das der Drosseleinrichtung zuströmende Gas kühlbar ist. Günstigerweise kann außerdem vorgesehen sein, dass der Verdichtungseinrichtung eine Mischeinrichtung vorgeschaltet ist, in der Treibstoff und Luft mischbar sind.

Die Erfindung betrifft außerdem einen Generator mit einer zuvorgenannten Brennkraftmaschine und einer zuvor genannten Regeleinrichtung für die Brennkraftmaschine.

Weitere Details und Vorteile der Erfindung werden anhand der schematischen Figuren und Figurenbeschreibungen erläutert. Es zeigt
- Fig.1: schematisch ein Ausführungsbeispiel einer erfindungsgemäßen Brennkraftmaschine mit Generator,
- Fig. 2: schematisch und stark vereinfacht ein Ausführungsbeispiel einer erfindungsgemäßen Regeleinrichtung und
- Fig. 3: ein Ausführungsbeispiel einer erfindungsgemäßen Regeleinrichtung.

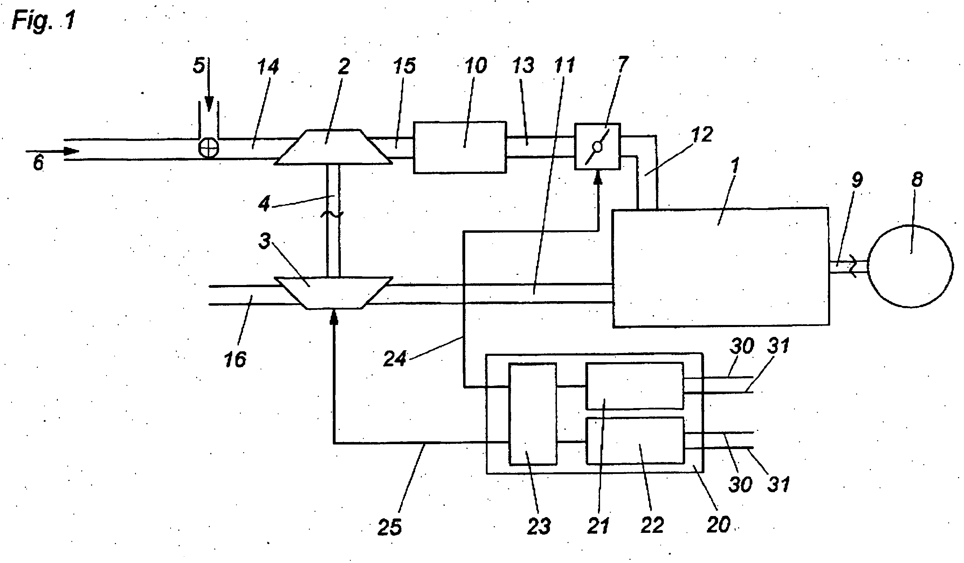

In der Fig. 1 ist eine stationäre Brennkraftmaschine 1 dargestellt. Das gezeigte Ausführungsbeispiel stellt einen Gasmotor da. Der Brennkraftmaschine 1 wird Luft 5 und Treibstoff 6 zugeführt, indem die Luft 5 und der gasförmige Treibstoff 6 am Knotenpunkt vermischt werden (der Knotenpunkt bildet somit eine Mischeinrichtung). Luft 5 und Treibstoff 6 bilden ein Gasgemisch, das der Verdichtungseinrichtung 2 über die Leitung 14 zugeführt wird. Die Verdichtungseinrichtung 2 ist über eine Welle 4 mit einer Abgasturbine 3 verbunden, die im Abgastrakt 11 der Brennkraftmaschine 1 angeordnet ist und wird über die Abgase der Brennkraftmaschine 1 betrieben. Die Abgasturbine 3 weist eine variable Turbinengeometrie nach an sich bekanntem Stand der Technik auf. Beispielsweise sind Schaufeln oder Flügel in der Abgasturbine 3 angeordnet, die durch einen Aktuator (nicht gezeigt) betätigbar sind und so die Stellung in der Abgasturbine 3 ändern. So lässt sich der Gasstrom in der Abgasturbine 3 verändern, wodurch die Verdichtungseinrichtung 2, die direkt über die Welle 4 von der Abgasturbine 3 angetrieben wird, mit veränderter Geschwindigkeit rotiert wird, sodass es zu einer höheren oder geringeren Verdichtung des Gases (hier Luft 5 und Treibstoff 6 Gemisch) kommt. Über die der Verdichtungseinrichtung 2 nachgeschaltete Leitung 15 wird das nunmehr verdichtete Treibstoff/Luftgemisch (verdichtetes Gas gemäß Patentanspruch) einer Kühleinrichtung 10 zugeführt, da das verdichtete Trdibstoff/Luftgemisch durch die Verdichtung stark erwärmt wird. Der Kühleinrichtung 10 ist eine Leitung 12 nachgeschaltet, die zur Drosseleinrichtung 7 (Drosselklappe) führt, die die Menge an Treibstoff/Luftgemisch über die Leitung 12 zur Brennkraftmaschine 1 reguliert. Gemäß EP 0 757 169 B1 wäre zwischen Leitung 13 (welche zwischen Verdichtungseinrichtung 2 und Drosselklappe 7 angeordnet und im gezeigten Ausführungsbeispiel auch noch der optionalen Kühleinrichtung 10 nachgeschaltet ist) und Leitung 14 eine Bypassleitung mit Ventil angeordnet (Umblaseventil), mit der ebenfalls die Menge an Gemisch regulierbar ist. Auf eine solche Bypasslassleitung könnte bei der Erfindungsgemäßen Einrichtung verzichtet werden.

Die dargestellte Brennkraftmaschine 1 treibt über eine Welle 9 einen Generator 8 an. Die eigentliche Regeleinrichtung ist mit dem Bezugszeichen 20 versehen. Die Regeleinrichtung 20 weist zwei Regler 21, 22 auf. Regler 21 ist dabei der Drosselklappe 7 zugeordnet (Drosselklappenregler 21). Regler 22 ist dem Stellglied zur Veränderung der Geometrie an der Abgasturbine zugeordnet (VTG-Regler 22). Beispielsweise einem Aktuator zur Betätigung der Schaufeln oder Flügel. Beiden Reglern 21, 22 wird die (beispielsweise durch Sensoren erfasste) Motorregelgröße 30, bevorzugt Leistung oder Drehzahl, zugeführt. Der jeweilige Sollwert 31 wird sowohl dem Drosselklappenregler 21 als auch dem VTG-Regler 22 zugeführt. Die jeweiligen Regler 21, 22 bilden die Regelabweichung durch Vergleich des Istwertes der Motorregelgröße 30 mit dem Sollwert 31. Daraus ermittelt der jeweilige Regler 21, 22 ein entsprechendes Signal, das über das entsprechende Stellglied (Drosselklappe 7 oder Mittel zur Veränderung der Geometrie der Abgasturbine 3) auf die Regelstrecke einwirkt und der Regelabweichung entgegenwirkt. Das entsprechende Signal wird über die Leitungen 24, 25 den entsprechenden Stellgliedern 7, 3 zugeführt. Im gezeigten Ausführungsbeispiel ist noch eine Verknüpfungseinrichtung 23 vorgesehen, sodass die beiden Regler 21, 22 aufeinander abgestimmt werden und nur bei entsprechender Regelabweichung beide oder nur eine Stellglied 7,3 wie oben beschrieben beeinflusst wird.

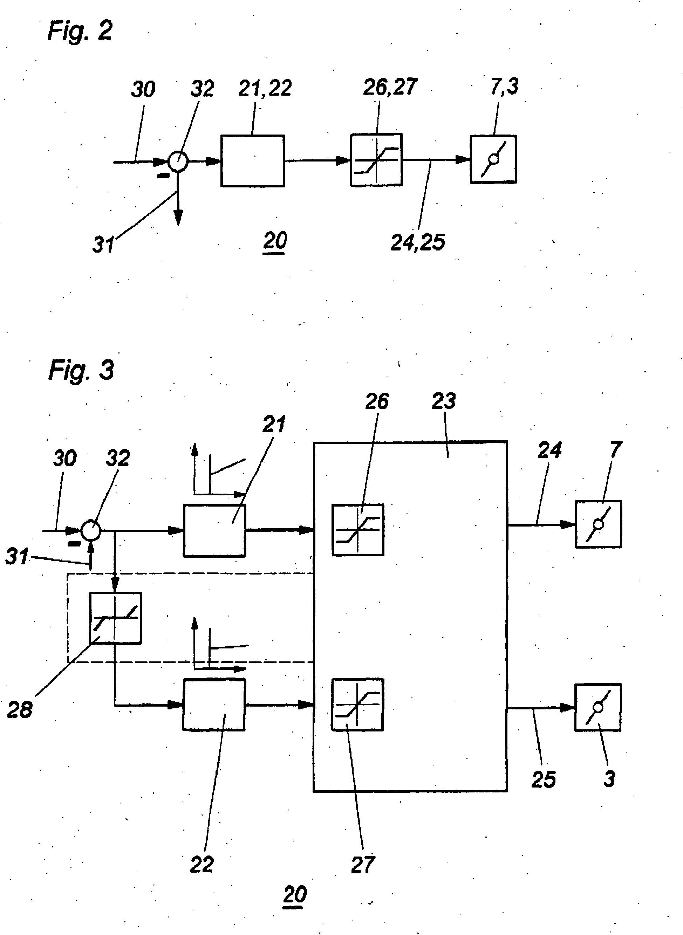

In der Fig. 2 ist schematisch die Regeleinrichtung 20 noch einmal dargestellt. Am Verknüpfungspunkt 32 wird die Differenz zwischen Sollwert 30 und Istwert 31 gebildet und dem Regler 21 oder 22 zugeführt. Die Regler können z.B. als PID-Regler oder PI-Regler ausgebildet sein. Andere Regler sind selbstverständlich auch denkbar. Aus der entsprechenden Regelabweichung wird beispielsweise mit einem PID-Regler die Motorregelgröße nachgeführt, indem die entsprechenden Stellglieder 7, 3 mit einem Signal über die Signalleitungen 24, 25 betätigt werden. Damit es zu keiner "Überregelung", verbunden mit einer Beschädigung oder Beeinträchtigung der Brennkraftmaschine 1 kommt, können noch Stellgrößenbeschränker 26, 27 nachgeschaltet werden, sodass die Drosselklappe 7 nur auf einen Maximalwert von beispielsweise 30% geöffnet werden kann. Ähnlich können die entsprechenden Mittel zur Änderung der Geometrie der Abgasturbine 3 entsprechend beschränkt werden.

Die Fig. 3 zeigt ein bevorzugtes Ausführungsbeispiel wie eine entsprechende Regeleinrichtung 20 in der Praxis aussehen könnte, Am Verknüpfungspunkt 32 wird Sollwert 30 mit Istwert 31 verglichen und das entsprechende Signal an den Drosselklappenregler 21 und den VTG-Regler 22 übermittelt. Dem VTG-Regler ist ein Totband 28 vorgeschaltet, sodass dieser Regler verzögert eingreifen könnte. Beispielsweise könnte eine Verzögerung von Sekundenbruchteilen vorgesehen sein, um bei einer nur sehr kurzen Schwankung im Motorragelsignal keine übermäßige Regelung zu verursachen. Auch ist die Reglercharakteristik der beiden Regler 21, 22 entsprechend unterschiedlich, wie dies in den oberhalb der Regler 21, 22 dargestellten Diagrammen angedeutet ist. Der Drosselklappenregler 21 ist im Beispiel ein PID-Regler mit steilerem Integralteil als der VTG-Regler 22, sodass auch hierdurch die Regelung stärker über die Drosselklappe 7 als über die Geometrieänderung der Abgasturbine 3 erfolgt. Den beiden Reglern 21, 22 ist eine Logik' 23 nachgeschaltet, die eine Stellgrößenbeschränkung 26 bzw. 27 für die jeweilige Stellgröße darstellt, sodass aus Sicherheitsgründen vom Reglerausgang kein zu großes Stellsignal an die Drosselklappe 7 oder die Abgasturbine 3 übermittelt wird.

## Patentansprüche

1. Regeleinrichtung für eine stationäre Brennkraftmaschine mit einer über eine Abgasturbine mit variabler Geometrie betreibbaren Verdichtungseinrichtung und mit einer Drosseleinrichtung, welche eine Motorregelgröße auf einen im Wesentlichen konstanten Sollwert regelt, wobei über die Regeleinrichtung (20) zumindest zwei Stellglieder beeinflussbar sind, **dadurch gekennzeichnet, dass** ein erstes Stellglied zum Verändern der Stellung der Drosseleinrichtung (7) vorgesehen ist, und dass ein zweites Stellglied zum Verändern der Geometrie der Abgasturbine vorgesehen ist, wobei im Betriebszustand bei einer Regelabweichung der Motorregelgröße vom Sollwert die der Brennkraftmaschine zugeführte Gasmenge über die Regeleinrichtung regelbar ist, indem die Stellung der Drosseleinrichtung (7) als erstem Stellglied und die Geometrie der Abgasturbine (3) als zweitem Stellglied veränderbar ist, wobei den beiden Stellgrößen jeweils ein Regler (21, 22), zugeordnet ist, wobei die wenigstens zwei Regler (21, 22) derart ausgebildet sind, dass die Veränderung der Geometrie der Abgasturbine (3) gegenüber der Beeinflussung der Stellung der Drosseleinrichtung (7) verzögert ist.

2. Regeleinrichtung nach Anspruch 1, **dadurch gekennzeichnet, dass** die Motorregelgröße die Leistung (p) oder die Drehzahl (n) ist.

3. Regeleinrichtung nach Anspruch 1 oder 2, **dadurch gekennzeichnet, dass** die Regeleinrichtung (20) derart ausgebildet ist, dass die Veränderung der Geometrie der Abgasturbine (3) untergeordnet erfolgt.

4. Regeleinrichtung nach einem der Ansprüche 1 bis 3, **dadurch gekennzeichnet, dass** die Regeleinrichtung (20) derart ausgebildet ist, dass sie bei einer Abweichung der Regelgröße von zumindest 5% vom Sollwert beide Stellgrößen beeinflusst.

5. Regeleinrichtung nach einem der Ansprüche 1 bis 4, **dadurch gekennzeichnet, dass** der Regeleinrichtung (20) eine Stellgrößenbesehränkung (26, 27) zugeordnet ist, sodass die Betätigung zumindest eines Stellgliedes derart beschränkt ist, dass die der Brennkraftmaschine zugeführte Gasmenge einen vorzugsweise vorgebbaren Maximalwert nicht überschreitet.

6. Regeleinrichtung nach einem der Ansprüche 1 bis 5, **dadurch gekennzeichnet, dass** zumindest ein Regler ein Totband (28) zur Verzögerung der Veränderung des Stellgliedes aufweist.

7. Stationäre Brennkraftmaschine mit einer Verdichtungseinrichtung zum Verdichten von dem Motor zugeführten Gas und einer der Verdichtungseinrichtung nachgeschalteten Drosseleinrichtung zur Mengenbeschränkung des der Brennkraftmaschine zugeführten verdichteten Gases, wobei die Verdichtungseinrichtung über eine Abgasturbine variabler Turbinengeometrie betreibbar ist, **gekennzeichnet durch** eine Regeleinrichtung nach einem der Ansprüche 1 bis 6, welche im Betriebszustand die Brennkraftmaschine (1) auf eine im Wesentlichen konstante Motorregelgröße über die Veränderung von zumindest zwei Stellgliedern regelt, indem die Regeleinrichtung die Drosseleinrichtung (7) als erstes Stellglied betätigt und die Geometrie der Abgasturbine (3) als zweites Stellglied verändert.

8. Brennkraftmaschine nach Anspruch 7, **dadurch gekennzeichnet, dass** die Motorregelgröße konstante Drehzahl der Brennkraftmaschine ist.

9. Brennkraftmaschine nach Anspruch 7 oder Anspruch 8, **dadurch gekennzeichnet, dass** die Motorregelgröße konstante Ausgangsleistung (p) der Brennkraftmaschine ist.

10. Brennkraftmaschine nach einem der Ansprüche 7 bis 9, **dadurch gekennzeichnet, dass** die Brennkraftmaschine als Gasmotor ausgebildet ist.

11. Generator mit Brennkraftmaschine nach einem der Ansprüche 7 bis 10.

## Claims

1. A regulating device for a stationary internal combustion engine comprising a compressor device operable by way of an exhaust gas turbine of variable geometry and a throttle device which regulates an engine regulating value to a substantially constant reference value, wherein at least two adjusting members can be influenced by way of the regulating device (20), **characterized in that** there is provided a first adjusting member for varying the position of the throttle device (7) and that there is provided a second adjusting member for varying the geometry of the exhaust gas turbine, wherein in the operating state upon a regulating deviation of the engine regulating value from the reference value the amount of gas fed to the internal combustion engine can be regulated by way of the regulating device by the position of the throttle device (7) as the first adjusting member and the geometry of the exhaust gas turbine (3) as the second adjusting member being variable, wherein a respective regulator (21, 22) is associated with the two adjusting values, wherein the at least two regulators (21, 22) are so designed that the change in the geometry of the exhaust gas turbine (3) is delayed in relation to the influencing of the position of the throttle device (7).

2. A regulating device according to claim 1, **characterized in that** the engine regulating value is the power (p) or the rotary speed (n).

3. A regulating device according to claim 1 or 2, **characterized in that** the regulating device (20) is so designed that the change in the geometry of the exhaust gas turbine (3) is effected in subordinate relationship.

4. A regulating device according to one of claims 1 to 3, **characterized in that** the regulating device (20) is so designed that it influences both adjusting values upon a deviation of the regulating value of at least 5% from the reference value.

5. A regulating device according to one of claims 1 to 4, **characterized in that** an adjusting value limitation (26, 27) is associated with the regulating device (20) so that the actuation of at least one adjusting member is limited in such a way that the amount of gas fed to the internal combustion engine does not exceed a preferably predeterminable maximum value.

6. A regulating device according to one of claims 1 to 5, **characterized in that** at least one regulator has a dead band for delaying the change in the adjusting member.

7. A stationary internal combustion engine comprising a compressor device for compressing gas fed to the engine and a throttle device connected downstream of the compressor device for limiting the amount of compressed gas fed to the internal combustion engine, wherein the compressor device is operable by way of an exhaust gas turbine of variable turbine geometry, **characterized by** a regulating device according to one of claims 1 to 6, which in the operating state regulates the internal combustion engine (1) to a substantially constant engine regulating value by way of the variation of at least two adjusting members, by the regulating device actuating the throttle device (7) as a first adjusting member and varying the geometry of the exhaust gas turbine (3) as a second adjusting member.

8. A stationary internal combustion engine according to claim 7, **characterized in that** the engine regulating value is a constant rotary speed of the internal combustion engine.

9. A stationary internal combustion engine according to claim 7 or 8, **characterized in that** the engine regulating value is a constant output power (p) of the internal combustion engine.

10. A stationary internal combustion engine according to one of claims 7 to 9, **characterized in that** the internal combustion engine is designed as gas engine.

11. A generator having an internal combustion engine according to one of claims 7 to 10.

## Revendications

1. Dispositif de réglage pour moteur à combustion interne fixe doté d'un dispositif de compression pouvant être exploité par une turbine à gaz à géométrie variable et comprenant un dispositif d'étranglement réglant une grandeur réglée du moteur sur une valeur théorique sensiblement constante, au moins deux éléments de régulation pouvant être influencés par le dispositif de réglage (20), **caractérisé en ce qu'**un premier élément de régulation est destiné à modifier la position du dispositif d'étranglement (7), et **en ce qu'**un second élément de régulation est destiné à modifier la géométrie de la turbine à gaz d'échappement, sachant que dans l'état de fonctionnement en cas d'écart de réglage entre la grandeur réglée du moteur et la valeur théorique, la quantité de gaz amenée au moteur à combustion interne peut être réglée par le dispositif de réglage, par le fait que la position du dispositif d'étranglement (7) comme premier élément de régulation et la géométrie de la turbine à gaz d'échappement (3) comme second élément de régulation peuvent être modifiées, un régulateur (21, 22) étant respectivement associé aux deux grandeurs réglées, les deux régulateurs (21, 22) ou plus étant réalisés de telle sorte que la modification de la géométrie de la turbine à gaz d'échappement (3) par rapport à l'influence de la position du dispositif d'étranglement (7) est différée.

2. Dispositif de réglage selon la revendication 1, **caractérisé en ce que** la grandeur réglée du moteur est la puissance (p) ou le régime (n).

3. Dispositif de réglage selon la revendication 1 ou 2, **caractérisé en ce que** le dispositif de réglage (20) est réalisé de telle sorte que la modification de la géométrie de la turbine à gaz d'échappement (3) s'effectue de manière secondaire.

4. Dispositif de réglage selon l'une quelconque des revendications 1 à 3, **caractérisé en ce que** le dispositif de réglage (20) est réalisé de telle sorte qu'il influence les deux grandeurs réglées dans le cas d'un écart d'au moins 5 % entre la grandeur réglée et la valeur théorique.

5. Dispositif de réglage selon l'une quelconque des revendications 1 à 4, **caractérisé en ce qu'**une limitation de grandeur réglée (26, 27) est associée au dispositif de réglage (20), de sorte que l'actionnement d'au moins un élément de régulation est limité de telle sorte que la quantité de gaz amenée au moteur à combustion interne ne dépasse pas une valeur maximale pouvant de préférence être prédéfinie.

6. Dispositif de réglage selon l'une quelconque des revendications 1 à 5, **caractérisé en ce qu'**au moins un régulateur comprend une bande atténuée (28) destinée à différer la modification de l'élément de régulation.

7. Moteur à combustion interne fixe comprenant un dispositif de compression destiné à comprimer le gaz amené par le moteur et un dispositif d'étranglement monté en aval du dispositif de compression et destiné à limiter la quantité de gaz comprimé amené au moteur à combustion interne, le dispositif de compression pouvant être exploité par une turbine à gaz d'échappement à géométrie variable, **caractérisé par** un dispositif de réglage selon l'une quelconque des revendications 1 à 6 réglant dans l'état de fonctionnement le moteur à combustion interne (1) à une grandeur réglée de moteur sensiblement constante par la modification d'au moins deux éléments de régulation, par le fait que le dispositif de réglage actionne le dispositif d'étranglement (7) comme premier élément de régulation et modifie la géométrie de la turbine à gaz d'échappement (3) comme second élément de régulation.

8. Moteur à combustion interne selon la revendication 7, **caractérisé en ce que** la grandeur réglée du moteur est le régime constant du moteur à combustion interne.

9. Moteur à combustion interne selon la revendication 7 ou la revendication 8, **caractérisé en ce que** la grandeur réglée du moteur est la puissance de sortie constante (p) du moteur à combustion interne.

10. Moteur à combustion interne selon l'une quelconque des revendications 7 à 9, **caractérisé en ce que** le moteur à combustion interne est réalisé comme un moteur à gaz.

11. Générateur à moteur à combustion interne selon l'une quelconque des revendications 7 à 10.
